# EUROPÄISCHE PATENTSCHRIFT

(11) **EP 0 537 110 B1**
(45) Veröffentlichungstag und Bekanntmachung des Hinweises auf die Patenterteilung: **14.12.1994**
(21) Anmeldenummer: 92810730.9
(22) Anmeldetag: 25.09.1992
(51) Int. Cl.: A23N 17/00

(54) **Verfahren zur Herstellung von Formlingen aus thermoplastisch verarbeitbaren Komponentengemischen**
Method of producing products from a thermoplastically processable component mixture
Méthode pour produire des articles moulés à partir de compositions façonnables comme des matières thermoplastiques

(30) Priorität: 07.10.1991 CH 2941/91
(43) Veröffentlichungstag der Anmeldung: 14.04.1993
(73) Patentinhaber: NATURALIS AG, CH-6340 Baar (CH)
(72) Erfinder: Huder, Marcel, CH-6330 Cham (CH)
(74) Vertreter: Müller-Gerbes, Margot, Dipl.-Ing.

(56) Entgegenhaltungen:
- EP-A- 0 040 406
- FR-A- 2 349 286
- US-A- 3 574 632
- US-A- 4 929 163
- Brockhaus Naturwissenschaften und Technik; S. 134

## Beschreibung

Die vorliegende Erfindung betrifft ein Verfahren zur Herstellung von Formlingen aus thermoplastisch verarbeitbaren Komponentengemischen, die vorwiegend pflanzliche Rohstoffe mit einem Stärkeanteil enthalten und die mittels thermoplastischer oder duroplastischer Verarbeitung einen Extruder durchlaufend danach in die endgültige Form der Formlinge gebracht werden.

Unter duroplastischer Verarbeitung ist das Herstellen von Formlingen unter Formgebung mit nachfolgender Aushärtung der Komponentengemische zu verstehen.

Schon seit Anfang 1950 sind erste Versuche bekannt, um aus eßbaren Stoffen thermoplastisch verarbeitbare Komponentengemische zu fertigen, die sich zu Formlingen verarbeiten lassen. Ein Beispiel zeigt die US-PS 2.645.587. Hier wird insbesondere von einem Ligno-Zellulosematerial ausgegangen, beispielsweise Nußschalen, Stroh, Reishülsen, Maiskolben und dergleichen. Diese Versuche kamen jedoch alle nicht aus einem Laborstadium heraus. Erst die DE-A-25 52 126 offenbarte in großer Ausführlichkeit eine thermoplastisch verarbeitbare und wasserlösliche Formmasse, die auch zur Herstellung von Formlingen geeignet ist. Die hier beschriebenen Komponentengemische bestehen im wesentlichen aus den Teilen Stärke, Casein-Natrium, sowie Glyzerin und einen Anteil an Gelatine und Lecithin. All diese Mischungen wurden jeweils in einem Mischer, in einem Doppelwalzenstuhl oder einem Kneter zu einer feinkörnigen Masse verarbeitet, die in einen Trichter eines Extruders gegeben wurde und in einem thermoplastischen Spritzvorgang zu den gewünschten Formlingen verarbeitet wurden. Dies schloss eine Zwischenlagerung vor dem Spritzvorgang aus.

Eine andere Lösung zeigt die WO90/05161. Zur Herstellung einer thermoplastisch verarbeitbaren Stärke wird hier im wesentlichen nativer und natürlicher Stärke ein Zuschlagstoff beigemischt und das Gemisch durch Zuführen von Wärme und mechanischer Energie in Schmelze gebracht. Beim Zuschlagstoff handelt es sich um eine Substanz, welche die Schmelztemperatur der Stärke erniedrigt, so dass die Schmelztemperatur der Stärke zusammen mit diesem Zuschlagstoff unterhalb der Zersetzungstemperatur der Stärke liegt. Während bei den bisher beschriebenen Komponentengemischen von einer inhomogenen Mischung ausgegangen wird, und diese Inhomogenität beibehalten wird, wird gemäss jener Erfindung die natürliche Stärke durch Beifügung von Zuschlagstoffe und Wärme zu einer Schmelze verarbeitet, die anschliessend in Form von Granulate, Pillen, Tabletten oder Pulver zur Weiterverarbeitung angeboten wird. Dies ist mit einem energetisch aufwendigen Prozess verbunden, bei dem ein Endprodukt erreicht wird, dass zwar biologisch abbaubar, jedoch seine natürliche Erscheinungsform verloren hat.

In der DE-A-40'27'786 sind schliesslich verschiedene thermoplastisch verarbeitbare Komponentengemische zur Herstellung von Nutzungs-, Gebrauchs- und Verpackungsgegenständen beschrieben. All die hier beschriebenen Komponentengemische bestehen im wesentlichen aus möglichst naturbelassenen Pflanzenteile mit Stärkeanteilen, Glyzerin und Konservierungsmittel, sowie unter Beigabe von Füllmaterialien, die pflanzliche Eiweisse als Bindemittel und eventuell Dextrine als Glanzmittel für die Oberfläche enthalten. Diese Komponenten wurden vermischt und anschliessend direkt auf Duroplast- oder Thermoplastmaschinen verarbeitet. Die dabei sich einstellenden Resultate waren äusserst verschieden. Bei gleicher Zusammensetzung der Mischung konnten kaum reproduzierbare Resultate erreicht werden. Es wird vermutet, dass die hohe Verdichtung und Erwärmung der Komponentengemische in der Extruderschnecke zu Strukturänderungen führen, die derart komplex sind, dass sie kaum beherrschbar werden.

Es ist zwar selbstverständlich aus zahlreichen Dokumenten, wie zum Beispiel FR-A-2'349'286, US-A-4'929'163, EP-A-0'040'406 und US-A-3'574'632 bekannt, dass man auf Pelletiermaschinen Futterwürfel herstellt, wobei die verarbeiteten Massen mit jenen zur Herstellung von thermo- oder duroplastischen Formlingen gewisse Aehnlichkeiten haben, doch stellte diese Verarbeitung die letzte formgeberische Veränderung dar. Gewisse nachfolgende Bearbeitungen befassten sich dann nur noch mit der Behandlung zur Verbesserung der Sterilität oder der Lagerfähigkeit.

Hingegen ist es nicht bekannt, dass bei der Herstellung von Formlingen aus thermo- oder duroplastisch verarbeitbaren Biomassen vor der Formgebung in einer Kunststoffspritzmaschine eine andere Art der Granulatherstellung als jene auf einer Extruderpresse verwendet wurde. Diese Form der Verarbeitung hat sich jedoch als ungeeignet erwiesen, da hierbei die verwendeten, stark inhomogenen Gemische zu einem Zwischenprodukt führten, das ungleichmässige physikalische Eigenschaften aufweist und so bei der endgültigen thermo- oder duroplastischen Verarbeitung zu Formlingen zu nicht kontinuierlich reproduzierbaren Resultate führte.

Es war daher die Aufgabe der vorliegenden Erfindung, ein Verfahren zur Herstellung von Formlingen aus thermoplastisch verarbeitbaren Kompontengemische zu schaffen, welches mit hoher Zuverlässigkeit zu immer wieder reproduzierbaren Ergebnissen führt.

Diese Aufgabe löst ein Verfahren mit den Merkmalen des Patentanspruches 1. Es besteht die Möglichkeit, die Feuchtigkeitszugabe und die Wärmezufuhr mittels Dampf zu regeln. Dies hat mehrere Vorteile: Es erhöht die teilweise Verkleisterung der Stärkeanteile, reduziert den Energieaufwand und ermöglicht die Zugabe von gewissen Zusätzen in gelöster Form.

Geschieht die Feuchtigkeitszugabe in flüssiger Form, so kann dies auch bei relativ tiefen Temperaturen geschehen, wodurch insbesondere pflanzliche Fette geschont werden. Will man trotz der Feuchtigkeitszugabe in flüssiger Form auch noch Wärme zuführen, so kann dies geschehen, indem man den Mischapparat beheizt. Hierdurch lässt sich die Temperaturzufuhr in Förderrichtung des Kompontengemisches im Mischapparat langsam steigernd durchführen.

Da es wünschenswert ist, dass die Pellets möglichst lange lagerfähig bleiben, ist eine weitgehende Feuchtigkeitsentnahme, dass heisst Trockenheit der Pellets, erstrebenswert. Es wird daher vorgeschlagen, in der Pelletierpresse die Feuchtigkeit dem Mischgut mindestens teilweise zu entnehmen. Dies kann beispielsweise dadurch geschehen, dass man relativ trockene warme Luft durch die Presstrommel der Pelletierpresse hindurchbläst.

Die Qualität der Pellets ist wesentlich auch von der Grösse derselben abhängig. Es ist daher sinnvoll, die Löcher in der Presstrommel der Pelletierpresse so zu wählen, dass die Pellets eine maximale Grösse von 8 mm, jedoch vorzugsweise von 2-3 mm aufweisen. Die Grösse der Pellets ist nicht zuletzt ein Massstab für die einwandfreie Weiterverarbeitung in der thermo- oder duroplastischen Formpressmaschine. Es kann daher vorteilhaft sein, die Pellets mittels eines Brechers vor der Weiterverarbeitung zu zerkleinern.

Anhand der beiliegenden Zeichnung und mittels der nachfolgenden Beschreibung soll das erfindungsgemässe Verfahren erläutert werden. Es zeigt:
- Figur 1: eine schematische Schnittzeichnung durch eine bekannte Pelletierpresse und
- Figur 2: eine vereinfachte Darstellung der Presstrommel der Pelletierpresse.
- Figur 3: zeigt ein Ablaufdiagramm des erfindungsgemässen Verfahrens.

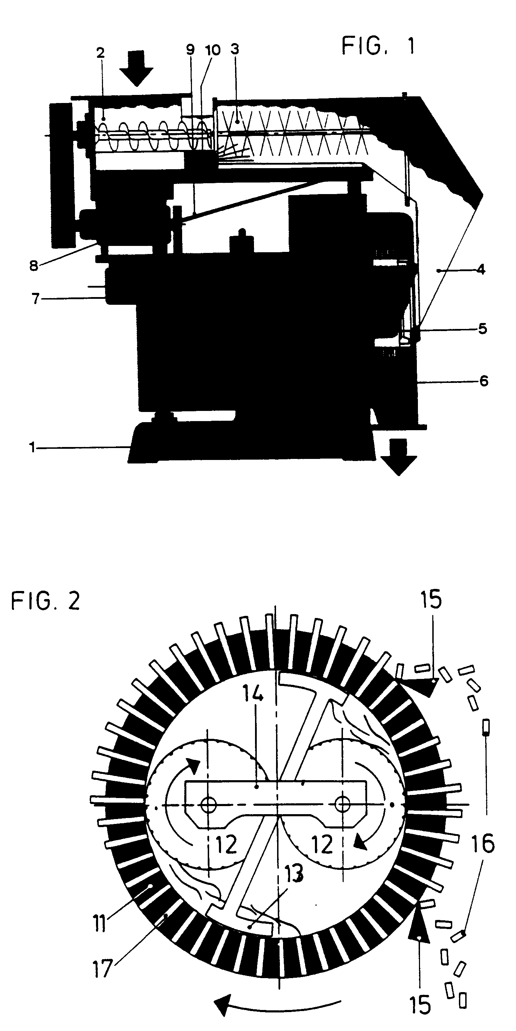

Die für das Verfahren wesentliche Pelletierpresse ist in der Figur 1 dargestellt. Sie steht auf einem Gestell 1 und hat oben einen Speiseapparat 2. Ueber einen, in der Zeichnung nicht dargestellten Einlauftrichter wird das vorgemischte Komponentengemisch in den Speiseapparat 2 geführt. Dieser dient der dosierten Zuführung des Komponentengemisches in einen anschliessenden Mischapparat 3. Dies geschieht mittels einer im Speiseapparat angeordneten Förderschnecke. Im Mischapparat 3 wird das bereits vorgemischte Komponentengemisch nochmals kräftig durcheinander gebracht und über einen Feuchtigkeitsanschluss 10 befeuchtet. Dies kann beispielsweise mittels Dampf geschehen. Hierbei kann es sich um reinen Wasserdampf handeln oder aber auch, um Wasserdampf, dem gewisse lösliche Komponenten beigegeben sind. Ueblicherweise arbeitet man mit einem Feuchtigkeitsgehalt von weniger als 5%, bezogen auf das Mischgut. Die Wärmezufuhr, die ebenfalls in diesem Bereich stattfindet, kann einerseits direkt durch den Dampf erfolgen oder aber hiervon getrennt, in dem man den Mischapparat 3 selber mit einer Heizung versieht. Hierbei kann der Mischapparat über seine gesamte Länge in verschiedene Heizzonen unterteilt sein. Das aus dem Mischapparat 3 geförderte Komponentengemisch gelangt über den Einlauf 4 zum Pressteil 5, dies ist im Detail in der Figur 2 dargestellt. Die Presstrommel 11 wird von einem Motor über ein Keilriemengetriebe 6 in Bewegung gesetzt. Ein Motor 7 treibt über einen Variator 8, sowohl den Mischapparat 3, wie auch den Speiseapparat 2.

Der Pressteil 5 ist in der Figur 2 in grösserem Massstab detailiert dargestellt. Die eigentliche Presstrommel ist mit 11 bezeichnet. In diese gelangt das Komponentengemisch vom Mischapparat 3 her kommend. In der rotierenden Presstrommel 11 sind zwei Pressrollen 12 auf einem Rollensteg 14 angeordnet. Eine Verteilvorrichtung 13 garantiert die gleichmässige Verteilung des Komponentengemisches im Bereich vor den Pressrollen 12, die den gleichen Drehsinn, wie die rotierende Presstrommel 11 haben. Das Komponentengemisch wird zwischen der rotierenden Presstrommel und den mitgenommenen Pressrollen eingequetscht und unter hohem Druck durch die Löcher 17 gepresst. Dadurch kommt eine Verfestigung des Komponentengemisches zu Stande. Die sich verkleisternde Stärke und andere Stoffe wirken dabei als Bindemittel. Die aus der rotierenden Presstrommel austretenden Würstchen werden von den Abstreifmessern 15 von der Presstrommelaussenwand abgeschabt. Hierdurch bilden sich die gewünschten Pellets. Diese fallen unten aus der Maschine heraus und werden anschliessend vor der Lagerung abgekühlt. Die Abkühlung kann in einem Schachtkühler erfolgen. In diesem sind je nach der gewünschten Kühlerdurchsatzleistung und der Verweilzeit eine beliebige Anzahl Kühlelemente übereinander angeordnet. Diese Elemente bestehen aus einem Blechgehäuse mit eingebauten Kaskaden oder Dächern. Seitlich dieser Schachtelemente ist auf die ganze Kühlerhöhe ein Luftabsaugschacht angeordnet. Eine Gliederklappe reguliert die Luftströmung. Die Kühlung kann aber auch mittels einem ebenfalls bekannten Bandkühler erfolgen. Dieser ist jedoch relativ platzraubend.

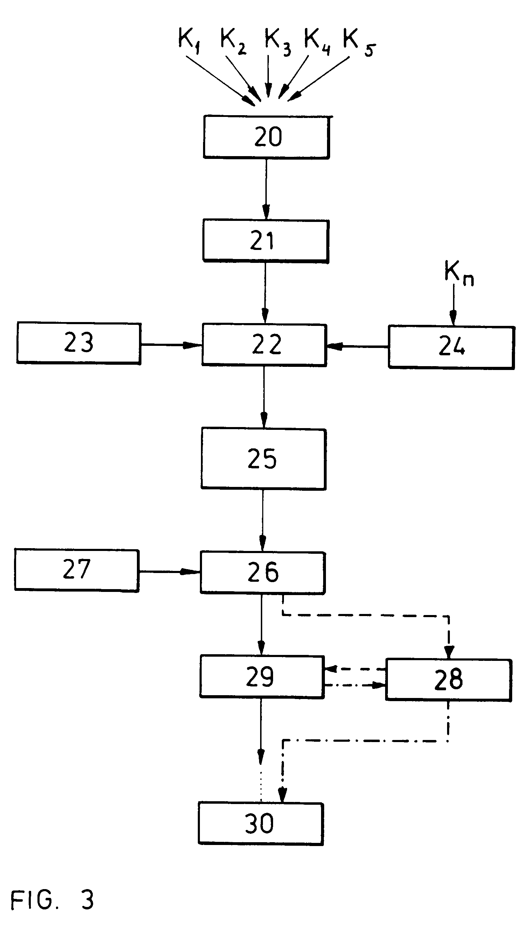

Das Schema gemäss der Figur 3 fasst das erfindungsgemässe Verfahren optisch übersichtlich zusammen. Zuerst werden die verschiedenen Komponenten K₁, K₂, K₃, K₄ usw. in einer ersten Stufe 20 vorgemischt. Bei 21 erfolgt die Dosierung des Komponentengemisches, worauf es dann in den Mischapparat gelangt, wo die Vermischung 22 stattfindet. Hier kann auch die Wärmezufuhr 23 und die Feuchtigkeitszugabe 24 geregelt werden. Ueber die Feuchtigkeitszugabe 24 kann gleichzeitig auch noch eine zusätzliche Beigabe von löslichen Komponenten Kₙ erfolgen. Hierauf erfolgt die Pelletierung 25 mittels der Pelletiertrommel, worauf die noch heissen und einen geringen Feuchtigkeitsanteil aufweisenden Pellets einer Kühlung 26 unterzogen werden. Dies kann beispielsweise unter Luftzufuhr 27 erfolgen. Es findet nun entweder eine direkte Lagerung 29 oder eventuell vorgängig eine Zerkleinerung 28 der Pellets statt. Die Zerkleinerung 28 der Pellets kann aber auch nach der Lagerung 29 erfolgen oder ganz ausbleiben. Die gelagerten Pellets werden dann der Weiterverarbeitung 30 zu Formlingen zugeführt. Dies kann auch durch die bekannten oder modifizierten thermo- oder duroplastischen Extruderform-Spritzmaschinen erfolgen.

Vergleiche zeigen, dass Formlinge, die aus Granulaten, die auf einer Pelletiermaschine gefertigt sind, zu genauen reproduzierbaren Resultaten führen, im Gegensatz zu Formlingen, die direkt aus der Biomasse auf der Extruderform-Spritzmaschine hergestellt wurden, und auch zu erheblich besseren und gleichmässigeren Resultaten führten als Formlinge, die aus einem Granulat gefertigt wurden, das auf einer Extrudiermaschine gefertigt wurde.

Die zu Formlingen verarbeitbaren Pellets enthalten, um eine hohe Lagerfähigkeit zu erhalten, einen sehr niedrigen Feuchtigkeitsgehalt. In gewissen Anwendungen, bei denen an die Fliessfähigkeit der Masse nur geringe Anforderungen gestellt sind, können die Pellets direkt zu Formlingen gepresst werden, was den Vorteil hat, dass die Formlinge in der Spritzform kaum eine Aushärtezeit benötigen, wodurch die Zykluszeit des Spritzvorganges gering ist.

In anderen Anwendungen ist es jedoch vorteilhaft, wenn im Bereich der Extruderschnecke der Extruderform-Spritzmaschine mindestens noch eine Feuchtigkeitszugabe erfolgt. Dies kann wieder flüssig oder dampfförmig sein. Gleichzeitig erlaubt dies die Beigabe von Fliess-und/oder Dichtmittel Glyzerin oder Collagen, sowie Gemische hieraus.

Die hier verwendeten Begriffe, Formlinge und Extruderform-Spritzmaschine sind im weitesten Sinne zu verstehen. So können die Formlinge auch endlos extrudierte Produkte, wie Profile, Rohre oder Folien sein. Unter Extruderform-Spritzform-Maschine soll allgemein eine Maschine verstanden werden, in der die Pellets durch einen Extruder laufen und danach in eine der obigen Formen gestaltet werden können.

## Patentansprüche

1. Verfahren zur Herstellung von Formlingen aus thermoplastisch verarbeitbaren Komponentengemischen, die vorwiegend pflanzliche Rohstoffe mit einem Stärkeanteil enthalten, und die mittels thermoplastischer oder duroplastischer Verarbeitung einen Extruder durchlaufend danach in die endgültige Form der Formlinge gebracht werden, **dadurch gekennzeichnet**, daß das vorgemischte Komponentengemisch über einen Speiseapparat dosiert einem Mischapparat zugeführt und in dem Mischapparat unter Feuchtigkeitszugabe und Wärmezufuhr gemischt und dann das Mischgut in eine Pelletierpresse mit Preßtrommel gefördert wird und unter Verfestigung des Komponentengemisches, wobei lediglich eine teilweise Verkleisterung der Stärke stattfindet, Pellets gebildet werden, anschließend die Pellets abgekühlt und lagerfähige Pellets erhalten werden, die mittels des Extruders zu den Formlingen weiterverarbeitet werden.

2. Verfahren nach Anspruch 1,
**dadurch gekennzeichnet**, daß die Feuchtigkeitszugabe und Wärmezufuhr in dem Mischapparat mittels Dampf erfolgt.

3. Verfahren nach Anspruch 1,
**dadurch gekennzeichnet**, daß die Feuchtigkeitszugabe in dem Mischapparat in flüssiger Form geschieht.

4. Verfahren nach Anspruch 3,
**dadurch gekennzeichnet**, daß die Wärmezufuhr durch Beheizung des Mischapparates erfolgt.

5. Verfahren nach Anspruch 1,
**dadurch gekennzeichnet**, daß in der Pelletierpresse Feuchtigkeit teilweise dem Mischgut entnommen wird.

6. Verfahren nach Anspruch 1,
**dadurch gekennzeichnet**, daß die Pellets durch Löcher in der Preßtrommel der Pelletierpresse gedrückt werden, die eine maximale lichte Weite von 8 mm, vorzugsweise von 2-3 mm aufweisen.

7. Verfahren nach Anspruch 6,
**dadurch gekennzeichnet**, daß die Pellets mittels eines Brechers zerkleinert werden.

8. Verfahren nach Anspruch 1,
**dadurch gekennzeichnet**, daß den Pellets bei der Weiterverarbeitung zu Formlingen mit einer eine Extruderschnecke aufweisenden Extruderform-Spritzmaschine mindestens einmal Feuchtigkeit im Bereich der Extruderschnecke zugegeben wird.

9. Verfahren nach Anspruch 8,
**dadurch gekennzeichnet**, daß die Zugabe von Feuchtigkeit mindestens ein Fließ- und/oder Dichtmittel enthält.

10. Verfahren nach Anspruch 9,
**dadurch gekennzeichnet**, daß man als Fließ- und/oder Dichtmittel Glyzerin und/oder Collagen verwendet.

## Claims

1. Method of producing briquettes from thermoplastically processable component mixtures which predominantly contain raw vegetable materials with a portion of starch and which are then brought into the final form of briquettes by means of thermoplastic or thermosetting processing on passing through an extruder, characterized in that the premixed component mixture is delivered, metered by a feed apparatus, to a mixing apparatus and is mixed in the mixing apparatus with the addition of moisture and the supply of heat and the mixed material is then conveyed into a pelletizing press with a pressing drum with the component mixture solidifying, only partial gelatinization of the starch taking place, pellets being formed and subsequently cooled and storable pellets being obtained which are further processed by the extruder to form the briquettes.

2. Method according to Claim 1, characterized in that the moisture addition and the heat supply take place in the mixing apparatus by means of steam.

3. Method according to Claim 1, characterized in that the moisture is added to the mixing apparatus in fluid form.

4. Method according to Claim 3, characterized in that the heat is supplied by heating the mixing apparatus.

5. Method according to Claim 1, characterized in that moisture is partially removed from the mixing material in the pelletizing press.

6. Method according to Claim 1, characterized in that the pellets are forced through holes in the pressing drum of the pelletizing press which have a maximum inside width of 8 mm, preferably of 2-3 mm.

7. Method according to Claim 6, characterized in that the pellets are crushed by means of a crusher.

8. Method according to Claim 1, characterized in that, when the pellets are further processed to form briquettes with an extruder moulding machine comprising a barrel extruder, moisture is added to the pellets at least once in the vicinity of the barrel extruder.

9. Method according to Claim 8, characterized in that the moisture added contains at least one flow and/or densifying agent.

10. Method according to Claim 9, characterized in that glycerol and/or collagen is used as the flow and/or densifying agent.

## Revendications

1. Méthode pour produire des pièces moulées à partir de mélanges de composants façonnables thermoplastiquement qui contiennent principalement des matières premières végétales avec une teneur en amidon et qui, après passage en continu dans une extrudeuse assurant le façonnage thermoplastique ou duroplastique, sont mis sous la forme finale de pièces moulées, caractérisée en ce que le mélange de composants prémélangés est dosé par un appareil d'alimentation et amené à un mélangeur et est mélangé dans le mélangeur avec adduction d'humidité et apport de chaleur, et en ce que le produit mélangé est amené dans une presse de granulation avec tambour de presse et avec consolidation du mélange des composants alors qu'il se produit seulement un empâtage partiel de l'amidon avec formation de granulés, lesdits granulés étant ensuite refroidis, et les granulés pouvant subir un stockage ainsi obtenus sont ensuite transformés en pièces moulées au moyen de l'extrudeuse.

2. Méthode selon la revendication 1,
caractérisée en ce que l'adduction d'humidité et l'apport de chaleur dans le mélangeur sont réalisés au moyen de vapeur d'eau.

3. Méthode selon la revendication 1,
caractérisée en ce que l'adduction d'humidité dans le mélangeur est réalisée sous forme liquide.

4. Méthode selon la revendication 3,
caractérisée en ce que l'adduction de chaleur est réalisée par chauffage du mélangeur.

5. Méthode selon la revendication 1,
caractérisée en ce que l'humidité est enlevée, au moins partiellement, du produit mélangé dans la presse de granulation.

6. Méthode selon la revendication 1,
caractérisée en ce que les granulés sont poussés à travers des trous dans le tambour de presse de la presse de granulation, ces trous ayant un diamètre de passage maximal de 8 mm mais compris, de préférence, entre 2 et 3 mm.

7. Méthode selon la revendication 6,
caractérisée en ce que les granulés sont fragmentés au moyen d'un broyeur.

8. Méthode selon la revendication 1,
caractérisée en ce que les granulés reçoivent au moins une fois une addition d'humidité dans la zone de la vis d'extrusion au cours de leur façonnage ultérieur en pièces moulées, avec une machine d'injection et de mise en forme par extrusion comportant une vis d'extrusion.

9. Méthode selon la revendication 8,
caractérisée en ce que l'humidité ajoutée contient au moins un agent de fluidisation et/ou d'étanchéité.

10. Méthode selon la revendication 9,
caractérisée en ce que l'on utilise comme agent de fluidisation et/ou d'étanchéité de la glycérine et/ou du collagène.
